# EUROPÄISCHE PATENTSCHRIFT

(11) **EP 2 742 788 B1**
(45) Veröffentlichungstag und Bekanntmachung des Hinweises auf die Patenterteilung: **21.10.2015**
(21) Anmeldenummer: 13401130.3
(22) Anmeldetag: 05.12.2013
(51) Int. Cl.: A01C 15/00

(54) **Streugerät**
Spreader device
Appareil d'épandage

(30) Priorität: 17.12.2012 DE 102012112367
(43) Veröffentlichungstag der Anmeldung: 18.06.2014
(73) Patentinhaber: Amazonen-Werke H. Dreyer GmbH & Co. KG, 49205 Hasbergen (DE)
(72) Erfinder: Giehoff, Stefan, 49205 Hasbergen (DE); Johannaber, Stefan Jan, 49536 Lienen (DE); Walter, Achim, 49078 Osnabrück (DE)

(56) Entgegenhaltungen:
- EP-A1- 1 704 765
- DE-A1- 19 501 528
- FR-A1- 2 588 836

## Beschreibung

Die Erfindung betrifft eine Verteilmaschine, insbesondere ein Streugerät gemäß des Patentanspruches 1.

Eine derartige Verteilmaschine mit einem Verletzungsschutz der Rührvorrichtung ist beispielsweise durch die Patentanmeldung EP 0 225 836 bekannt geworden. Diese horizontale Rührvorrichtung ist in einem Streugerät mit zwei Vorratsbehältern angeordnet. Dabei durchragt die Rührwelle die unteren Trichterbereiche des Vorratsbehälters. Durch einen motorisch angetriebenen Exzenterantrieb wird die Rührwelle in eine hin- und hergehende Drehbewegung gebracht. An den Rührwellenenden sind senkrecht nach unten ausgerichtete Rührarme angeordnet, die mit der Rührwelle in elastischer Weise verbunden sind. Durch die kurzen hin- und hergehenden Drehbewegungen der Rührwelle werden die Rührarme zu einer schwingenden Bewegung angeregt. Die elastische Ausführung der Rührarme verringert zwar eine große Unfallgefahr, sie ist allerdings nachteilig gegenüber der Zerstörung von Streugutverfestigungen, d.h. harte Streugutkluten können nicht aufgebrochen werden. Die Rührwelle selbst wird bei einer Blockade der Rührarme nicht still gesetzt.

Eine weitere Verteilmaschine ist durch die DE 28 35 011 bekannt. Diese Verteilmaschine ist als Streugerät ausgebildet. Dieser Streuer weist eine waagerecht angeordnete Rührwelle in den unteren Trichterbereichen des Vorratsbehälters auf. Auf den Wellenenden der Rührwelle sind die Rührorgane angeordnet. Die Rührwelle ist durch die Trichterwand des dachförmigen Mittelteils des Vorratsbehälters hindurchgeführt. Die Rührwelle wird in einer Ausgestaltung über einen Freilauftrieb schubweise in Drehung versetzt. Nachteilig ist bei dieser Ausführung, dass keine Abschaltvorrichtung vorgesehen ist. Wird beispielsweise durch fehlerhaftes Verhalten des Anwenders der Vorratsbehälter bei rotierender Rührwelle betreten und von dieser erfasst, ist eine hohe Unfallgefahr gegeben, weil keine Überlastsicherheit verbaut ist. Weiterhin ist das Nichtvorhandensein eines Überlastschutzes im Antrieb der Rührwelle auch in dem Fall nachteilig, wenn unzerdrückbare Gegenstände zwischen der Trichterwand und den Rührelementen gelangen.

Der Erfindung liegt die Aufgabe zu Grunde, einen einfach ausgestalteten Überlastschutz mit gleichzeitiger Außerbetriebssetzfunktion des Rührorgans in die Rührwerksvorrichtung zu integrieren, um die zuvor beschriebenen Nachteile zu vermeiden.

Die Aufgabe wird erfindungsgemäß durch die Merkmale des Anspruches 1 gelöst. Hierbei wirkt das Verbindungselement der Rührvorrichtung, welches zwischen der Antriebsvorrichtung und dem Rührorgan angeordnet ist, als Abschaltelement und/oder Überlastschutz. Es ist also in einfacher Weise ein sehr hoher Unfallschutz gegeben.

Damit die Rührvorrichtung immer in seine vorgesehene Position sich befindet, ist vorgesehen, dass das Verbindungselement beigesteif ausgebildet ist.

Um eine Führung und Lagerung des Verbindungselementes zu erreichen, ist vorgesehen, dass die Hohlwelle mittels Lagerelementen drehbar angeordnet ist.

In einfacher Weise lässt sich das drehelastische Verbindungselement dadurch verwirklichen, dass das Verbindungselement als zumindest eine langgestreckte Blattfeder ausgebildet und als ein mit mehreren nebeneinander angeordnete Blattfedern ausgebildetes Federpaket ist. Ein derartiges Federpaket kann einfach zwischen der Antriebsvorrichtung und Rührorgan angeordnet werden und begünstigt den Effekt der gewollten Torsion des Verbindungselementes.

Um eine biegesteife Ausgestaltung des Verbindungspaketes zu verwirklichen, ist vorgesehen, dass eine im Vorratsbehälter angeordnete und/oder in diesen hineinragende Hohlwelle vorgesehen ist, dass in dieser Hohlwelle das drehelastische Verbindungselement angeordnet ist. Durch die Anordnung der Blattfedern in der Hohlwelle, wird eine Auslenkung der Blattfedern, die das Verbindungselement bilden, vermieden. Die Hohlwelle ragt in den Vorratsbehälter hinein und führt hier auch die Blattfedern. Darüberhinaus deckt die Hohlwelle das Blattfedern ausgebildete Verbindungselement ab, so dass ein verbesserter Unfallschutz erreicht wird.

Hierdurch wird sehr einfach eine hohe Biegesteifigkeit des Verbindungselementes erreicht.

Eine Verschmutzung im Innenbereich der Hohlwelle wird dadurch verhindert, dass sich an dem freien Ende der Hohlwelle sich das mit dem Verbindungselement verbundene Rührelement vorzugsweise unmittelbar anschließt. So wird vermieden, dass Verunreinigungen wie beispielsweise durch Schmutz und/oder Dünger in die Hohlwelle gelangt.

Eine einfache Ausgestaltung der Verbindungsaufnahmen lässt sich dadurch erreichen, dass der Wellenansatz der Antriebseinheit an ihrem freien Ende und der mit dem Rührorgan verbundene Befestigungsabschnitt jeweils zumindest einen schlitzartigen Ansatz aufweisen, und dass in diesen schlitzartigen Ansätzen das vorzugweise als mehrere Blattfedern ausgebildete, drehelastische Verbindungselement angeordnet ist.

Um eine einfache Verbindung der Aufnahme des aus mehreren Blattfedern bestehenden drehelastischen Federpaketes mit der Antriebseinrichtung und dem Rührorgan zu ermöglichen, ist vorgesehen, dass die Hohlwelle zu dem freien Wellenansatz der Antriebseinheit an ihrem Ende zumindest einfach geschlitzt ausgebildet ist und den Wellenansatz der Antriebseinheit zumindest teilweise überragt.

Eine weitere vorteilhafte Ausführung der Verbindungen ergibt sich dadurch, dass der Wellenansatz der Antriebseinheit an ihrem freien Ende ein kreuzschlitzartiges Profil und der mit dem Rührorgan verbundene Befestigungsabschnitt einen schlitzartigen Ansatz aufweist, und dass in diesen Ansätzen, das vorzugsweise als Kreuzprofilwelle ausgebildete, drehelastische Verbindungselement angeordnet ist.

Eine einfache drehfeste Verbindung von Antriebseinheiten und Verbindungselement wird dadurch erreicht, dass die Antriebseinheit mit dem Verbindungselement formschlüssig verbunden ist.

Des Weiteren ist vorgesehen, dass das drehelastische Verbindungselement gegenüber der Antriebeinheit und des Rührorgans vorgespannt werden kann.

Weitere Einzelheiten der Erfindung sind den übrigen Unteransprüchen, der Beispielbeschreibung und den Zeichnungen zu entnehmen. Hierbei zeigen:

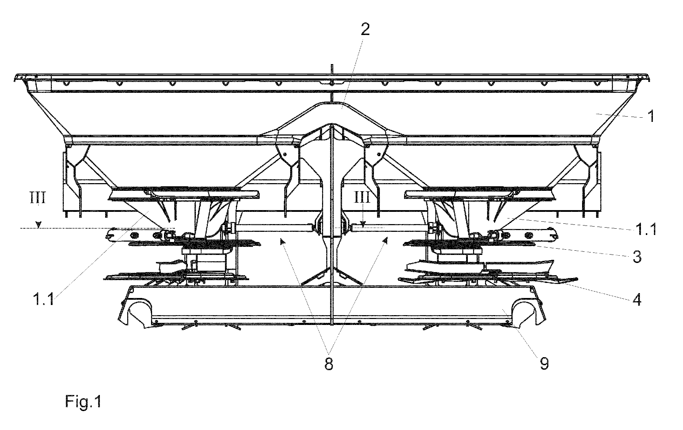

- Fig.1: in der Ansicht von hinten,

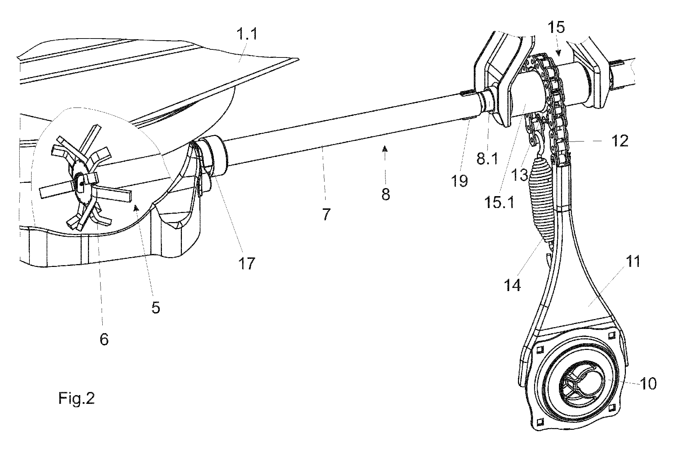

- Fig.2: eine Rühreinrichtung mit Antriebseinheit der ausschnittsweise dargestellten und als Streuer ausgebildeten Verteilmaschine in vergrößertem Maßstab und perspektivischer Darstellung,

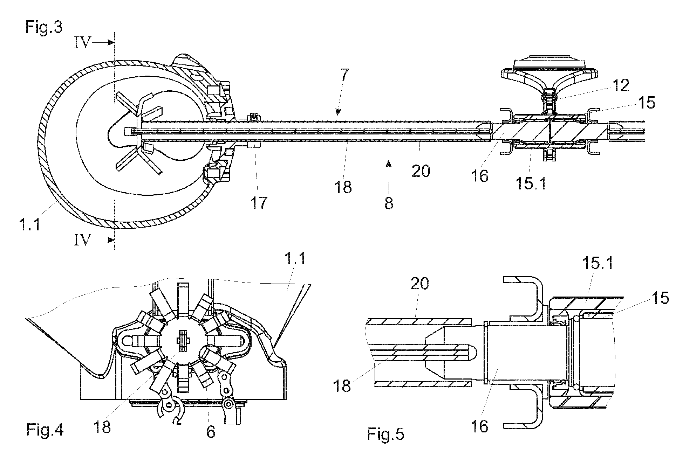

- Fig.3: die Rühreinrichtung Schnittansicht III - III mit angeordnetem Federpaket als Verbindungselement,
- Fig.4: die Rühreinrichtung in der Ansicht IV - IV,
- Fig.5: der Befestigungsabschnitt der Antriebswelle und dem Verbindungselementes in der Ansicht gemäß Fig.3, jedoch ausschnittsweise und vergrößertem Maßstab,

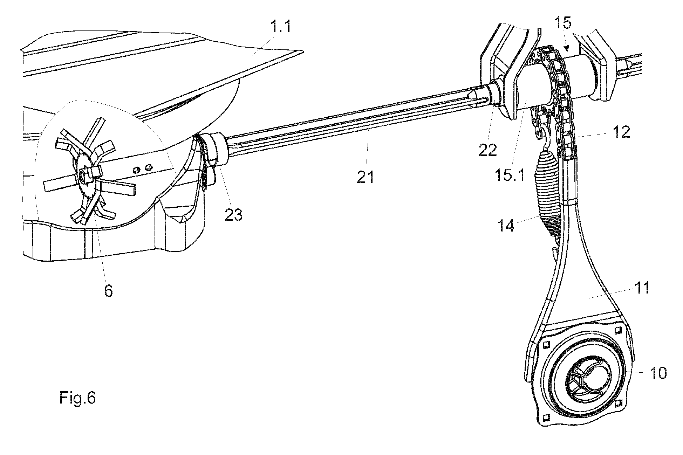

- Fig.6: weitere Rühreinrichtung mit angeordneter Kreuzprofilwelle als Verbindungselement in der Darstellungsweise gemäß Fig.2,

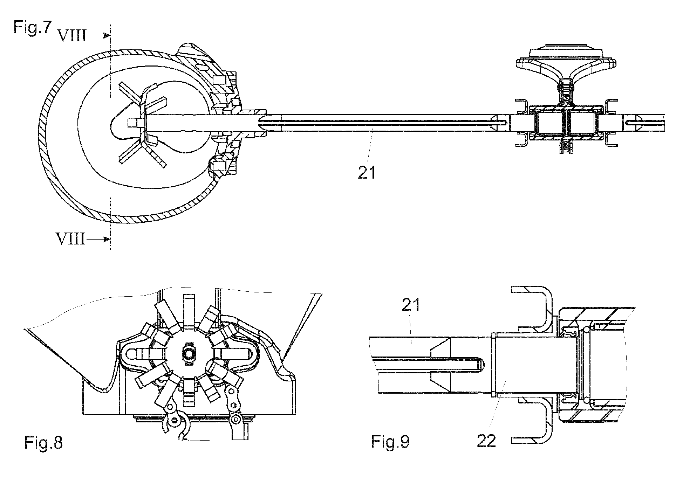

- Fig.7: die Rühreinrichtung gemäß Fig.6 mit Darstellung der Stirnseite des Rührorgans im Schnitt III - III,
- Fig.8: die Rühreinrichtung in der Ansicht VIII - VIII und
- Fig. 9: der Befestigungsabschnitt der Antriebswelle und dem Verbindungselementes in der Ansicht gemäß Fig.7, jedoch ausschnittsweise und vergrößertem Maßstab.

Diese als Streugerät ausgebildete Verteilmaschine ist als Zentrifugalstreuer ausgebildet. Der Vorratsbehälter 1 ist durch ein dachförmiges Mittelteil 2 in die beiden Trichterspitzen 1.1 aufgeteilt. Die unteren Enden der Trichterspitzen 1.1 sind jeweils eine Dosiereinrichtung 3 abgeschlossen. Die Dosiervorrichtung 3 führt das sich im Vorratsbehälter 1 befindliche und zu verteilende Streugut in einstellbaren Mengen den unterhalb der Dosiereinrichtung 3 angeordneten und mit zwei Wurfschaufeln besetzten Schleuderscheiben 4 zu. Des Weiteren ist im Bereich der Trichterspitzen 2 eine Rühreinrichtung 5 angeordnet.

Die Rührvorrichtung 5 weist das Rührorgan 6, das drehelastische Verbindungselement 7 und die Antriebsverbindung 8 auf und wird von einer nicht dargestellten motorischen Antriebsvorrichtung angetrieben.

Die Antriebswelle der Rührvorrichtung 5 ist an ihrem einen Ende mittels eines Lagers am Rahmen 9 des Streuers gelagert. An der Antriebswelle ist die Exzenterscheibe 10 drehfest angeordnet. An der Exzenterscheibe 10 ist eine Pleuelstange 11 angelenkt. An das dem Exzenter abgewandte Ende der Pleuelstange 11 ist eine Rollenkette 12 angeordnet, die umgelenkt über ein Zahnrad 13 über eine Zugfeder 13 am Rahmen 9 des Streuers befestigt ist. Das Zahnrad 13 ist drehfest mit dem Gehäuse 15.1 eines der Rührvorrichtung 5 zugeordneten Freilaufes 15 verbunden. Das Antriebselement des Freilaufes 15 ist drehfest mit der Rührwelle 8.1 der Rührvorrichtung 5 verbunden. Die durch die Rotation der Exzenterscheibe 10 erzeugte Hubbewegung der Pleuelstange 11, wird von der Rollenkette 12 auf das Zahnrad 13 übertragen. Die an der Rollenkette 12 angeordnete Zugfeder 14 hält die Rollenkette 12 auf dem Zahnrad 13 und dreht beim Rückhub des Pleuls 11 das Gehäuse 15.1 des Freilaufes 15 zurück. Das Zahnrad 13 ist über einen Freilauf 15 mit der Antriebswelle 16 verbunden. Die Antriebswelle ist am Rahmen 9 des Streues angeordnet. Durch den Freilauf 15 wird eine Drehbewegung der Antriebswelle 16, durch die von der Exzenterscheibe 10 und der Pleuelstange 11 erzeugten hin- und hergehenden Hubbewegung und der erzeugten Hin- und Herdrehung des Gehäuses, in nur eine Richtung erzeugt.

Die Antriebswelle 16 ist über ein drehelastischen Verbindungselement 7 mit dem Rührorgan 6 verbunden, welches in der Trichterspitze 1.1 angeordnet ist. Das Verbindungselement 7 ist an der Trichterspitze 1.1 mittels einer Lagerung 17 angeordnet. Wenn unzerdrückbare Gegenstände zwischen den Rührorganen 6 und den Wandungen des Vorratsbehälters 1 gelangen sollten, kommt es zum Blockieren der Rührvorrichtung 5. In diesem Fall kann sich das Verbindungselement 7 elastisch verdrehen. Damit die Streckgrenze des Verbindungselementes 7 nicht überschritten werden kann und es somit zu keinem Bruch des Verbindungselementes 7 kommt, darf der Verdrehwinkel des Verbindungselementes 7 zu dem Verdrehwinkel des nur in eine Richtung verdrehenden Freilaufs 15 größer- oder zumindest gleich groß sein. Des Weiteren kann es so zu keiner Beschädigung an den Rühr- und/oder Dosiervorrichtung 3, 5, an der Antriebsvorrichtung oder beispielsweise menschlichen Körperteilen kommen.

Um das Verbindungselement 7 in einfacher Weise drehelastisch auszuführen, ist es als Blattfederpaket 18 ausgeführt. Die Blattfedern des Federpaketes 18 sind drehfest in den in den Enden der Antriebswelle 16 und des Rührorgans 6 angebrachten Schlitzen angeordnet. Das Federpaket 18 wird durch aufeinandergelegte Blattfedern ausgebildet, die an einem Ende eine Sicherungsnase 19 aufweist. Die Sicherungsnase 19 wird in den schlitzartig ausgebildeten Wellenansatz der Antriebswelle 16 aufgenommen. Damit das Federpaket 18 ohne eine Verbiegung geführt werden kann, wird eine Hohlwelle 20 mit geschlitzten Enden über das Federpaket 18 auf den Wellenansatz der Antriebswelle 16 geschoben und durch die eingeschobenen Sicherungsnasen 19 gegen eine Verdrehung gesichert. Somit wird durch die Hohlwelle 20 eine hohe Biegesteifigkeit des als Blattfedern ausgebildeten Verbindungselementes 15 erreicht. Das andere Ende des Federpaketes 18 ragt in der Mitte des Rührorgans 6 schlitzartig ausgestaltete Profil und ist mit diesem drehfest befestigt. Die aufgeschobene Hohlwelle 20 liegt bündig mit ihrer Stirnseite an dem Rührorgan 6 an und lässt so keine Verschmutzungen in den Innenbereich der Hohlwelle 20 gelangen. Des Weiteren ist die Hohlwelle 20 an der Trichterspitze 2 gelagert. Das in der Hohlwelle angeordnete Blattfederpaktet 18 kann sich bei Blockade des Rührorganes 6 gegenüber der Hohlwelle 20 frei verdrehen.

Um bei einer Blockade des Rührorgans 6 durch einen unzerdrückbaren Gegenstand ist das zwischen dem Freilauf 15 und dem Rührorgan 6 angeordnete als Blattfederpaket 18 ausgebildete Verbindungselement 7 drehelastisch und als Torsionselement ausgebildet und zwar derart, dass dieses Verbindungselelement 7 bzw. das Blattfederpaket einen Verdrehwinkel des Verbindungselementes 7 bzw. des Blattfederpaketes 18 zwischen dem Freilauf 15 und dem Rührorgan 6 ermöglicht, der zumindest gleich oder größer als der vom Exzenter 10 erzeugte Verdrehwinkel an dem Gehäuse 15.1 des Freilaufes 15 ist.

Eine weitere Möglichkeit ist die Ausgestaltung des Verbindungselementes durch eine Kreuzprofilwelle 21. Die Kreuzprofilwelle 21 sitzt formschlüssig in einem entsprechend kreuzgeschlitzten Wellenansatz der Antriebswelle 22. Das abgewandte Ende weist ein Vollwellenprofil auf, auf der die Lagerstelle 23 angeordnet ist. Zudem ist das Wellenende mit einem schlitzartigen Profil ausgestaltet, das formschlüssig in das schlitzartige Profil des Rührorgans 6 eingefügt und mit diesem befestigt wird.

## Patentansprüche

1. Verteilmaschine, insbesondere Streugerät mit Vorratsbehälter (1), einer vorzugsweise im unteren Bereich des Vorratsbehälters (1) angeordneten Rührvorrichtung (5), die sich vorzugsweise oberhalb einer Dosiereinrichtung (3) befindet, wobei die Rührvorrichtung (5) durch eine Antriebsvorrichtung (8) über ein drehelastisches und/oder als Torsionsfeder ausgebildetes Verbindungselement (7) mit einem Rührorgan verbunden ist, **dadurch gekennzeichnet, dass** das zwischen Antriebseinheit und Rührorgan (6) angeordnete Verbindungselement (7) langgestreckt und biegesteif ausgebildet ist, dass eine im Vorratsbehälter (1) angeordnete und/oder in diesen hineinragende Hohlwelle (20) vorgesehen ist, dass in dieser Hohlwelle (20) das drehelastische Verbindungselement angeordnet ist, und dass die Hohlwelle (20) mittels Lagerelementen (17) drehbar angeordnet ist.

2. Verteilmaschine zumindest einem der vorstehenden Ansprüchen, **dadurch gekennzeichnet, dass** das Verbindungselement (7) als zumindest eine langgestreckte Blattfeder ausgebildet und als ein mit mehreren nebeneinander angeordnete Blattfedern ausgebildetes Federpaket (18) ist.

3. Verteilmaschine nach zumindest einem der vorstehenden Ansprüchen, **dadurch gekennzeichnet, dass** sich an dem freien Ende der Hohlwelle (20) sich das mit dem Verbindungselement (7, 18) verbundene Rührelement (6) vorzugsweise unmittelbar anschließt.

4. Verteilmaschine nach zumindest einem der vorstehenden Ansprüchen, **dadurch gekennzeichnet, dass** der Wellenansatz (22) der Antriebseinheit an ihrem freien Ende und der mit dem Rührorgan (6) verbundene Befestigungsabschnitt jeweils zumindest einen schlitzartigen Ansatz aufweisen, und dass in diesen schlitzartigen Ansätzen, das vorzugweise als mehrere Blattfedern (18) ausgebildete, drehelastische Verbindungselement (7) angeordnet ist.

5. Verteilmaschine nach zumindest einem der vorstehenden Ansprüchen, **dadurch gekennzeichnet, dass** die Hohlwelle (20) zu dem freien Wellenansatz (21) der Antriebseinheit an ihrem Ende zumindest einfach geschlitzt ausgebildet ist und den Wellenansatz der Antriebseinheit zumindest teilweise überragt.

6. Verteilmaschine nach zumindest einem der vorstehenden Ansprüchen, **dadurch gekennzeichnet, dass** der Wellenansatz (21) der Antriebseinheit an ihrem freien Ende ein kreuzschlitzartiges Profil und der mit dem Rührorgan verbundene Befestigungsabschnitt einen schlitzartigen Ansatz aufweist, und dass in diesen Ansätzen, das vorzugsweise als Kreuzprofilwelle ausgebildete, drehelastische Verbindungselement (18) angeordnet ist.

7. Verteilmaschine nach zumindest einer der vorstehenden Ansprüche, **dadurch gekennzeichnet, dass** die Antriebseinheit mit dem Verbindungselement (7, 18) formschlüssig verbunden ist.

8. Verteilmaschine nach zumindest einem der vorstehenden Ansprüchen, **dadurch gekennzeichnet, dass** das drehelastische Verbindungselement (7, 18) gegenüber der Antriebeinheit und des Rührorgans (6) vorgespannt werden kann.

## Claims

1. Distributing machine, in particular spreader device, with a storage container (1), a stirring apparatus (5) which is preferably arranged in the lower region of the storage container (1) and is preferably located above a metering means (3), wherein the stirring apparatus (5) is connected by a driving apparatus (8) to a stirring member via a connecting element (7) which is torsionally elastic and/or in the form of a torsion spring, **characterized in that** the connecting element (7) arranged between drive unit and stirring member (6) is of elongate and flexurally rigid design, **in that** a hollow shaft (20) which is arranged in the storage container (1) and/or projects into the latter is provided, **in that** the torsionally elastic connecting element is arranged in said hollow shaft (20), and **in that** the hollow shaft (20) is arranged rotatably by means of bearing elements (17).

2. Distributing machine according to Claim 1, **characterized in that** the connecting element (7) is designed as at least one elongate leaf spring and as a spring assembly (18) formed by a plurality of leaf springs arranged next to one another.

3. Distributing machine according to at least one of the preceding claims, **characterized in that** the stirring element (6) which is connected to the connecting element (7, 18) preferably directly adjoins the free end of the hollow shaft (20).

4. Distributing machine according to at least one of the preceding claims, **characterized in that** the free end of the shaft attachment (22) of the drive unit and the fastening section which is connected to the stirring member (6) both have at least one slot-like attachment, and **in that** the torsionally elastic connecting element (7) which is preferably in the form of a plurality of leaf springs (18) is arranged in said slot-like attachments.

5. Distributing machine according to at least one of the preceding claims, **characterized in that** the hollow shaft (20) for the free shaft attachment (21) of the drive unit is designed at the free end thereof so as to have at least a single slot and at least partially projects beyond the shaft attachment of the drive unit.

6. Distributing machine according to at least one of the preceding claims, **characterized in that** the free end of the shaft attachment (21) of the drive unit has a cross-slot-like profile and the fastening section connected to the stirring member has a slot-like attachment, and **in that** the torsionally elastic connecting element (18) which is preferably in the form of a cross profile shaft is arranged in said attachments.

7. Distributing machine according to at least one of the preceding claims, **characterized in that** the drive unit is connected in a form-fitting manner to the connecting element (7, 18).

8. Distributing machine according to at least one of the preceding claims, **characterized in that** the torsionally elastic connecting element (7, 18) can be pre-stressed in relation to the drive unit and the stirring member (6).

## Revendications

1. Épandeur, en particulier appareil d'épandage avec un réservoir (1), un dispositif agitateur (5) disposé de préférence dans la région inférieure du réservoir (1), lequel se trouve de préférence au-dessus d'un dispositif de dosage (3), le dispositif agitateur (5) étant relié à un organe agitateur par un dispositif d'entraînement (8) par le biais d'un élément de connexion (7) élastique en rotation et/ou réalisé sous la forme d'un ressort de torsion, **caractérisé en ce que** l'élément de connexion (7) disposé entre l'unité d'entraînement et l'organe agitateur (6) est réalisé sous forme allongée et rigide en flexion, **en ce qu'**un arbre creux (20) disposé dans le réservoir (1) et/ou pénétrant dans celui-ci est prévu, **en ce que** l'élément de connexion élastique en rotation est disposé dans cet arbre creux (20), et **en ce que** l'arbre creux (20) est disposé de manière à pouvoir tourner au moyen d'éléments de palier (17).

2. Épandeur selon la revendication 1, **caractérisé en ce que** l'élément de connexion (7) est réalisé sous forme d'au moins un ressort à lame allongé et sous forme d'un paquet de ressorts (18) réalisé avec plusieurs ressorts à lame disposés les uns à côté des autres.

3. Épandeur selon au moins l'une quelconque des revendications précédentes, **caractérisé en ce que** l'élément agitateur (6) connecté à l'élément de connexion (7, 18) se raccorde de préférence directement à l'extrémité libre de l'arbre creux (20).

4. Épandeur selon au moins l'une quelconque des revendications précédentes, **caractérisé en ce que** la pièce d'arbre (22) de l'unité d'entraînement, à son extrémité libre, et la portion de fixation connectée à l'organe agitateur (6) présentent chacune au moins une pièce de type fendu et **en ce que** dans ces pièces de type fendu est disposé l'élément de connexion (7) élastique en rotation réalisé de préférence sous la forme de plusieurs ressorts à lame (18).

5. Épandeur selon au moins l'une quelconque des revendications précédentes, **caractérisé en ce que** l'arbre creux (20) est réalisé, à son extrémité, de manière fendue au moins une fois vers la pièce d'arbre libre (21) de l'unité d'entraînement et fait saillie au moins en partie au-delà de la pièce d'arbre de l'unité d'entraînement.

6. Épandeur selon au moins l'une quelconque des revendications précédentes, **caractérisé en ce que** la pièce d'arbre (21) de l'unité d'entraînement présente au niveau de son extrémité libre un profil de type fente cruciforme et la portion de fixation connectée à l'organe agitateur présente une pièce de type fendu et **en ce que** l'élément de connexion (18) élastique en rotation, de préférence réalisé sous forme d'arbre profilé cruciforme, est disposé dans ces pièces.

7. Épandeur selon au moins l'une quelconque des revendications précédentes, **caractérisé en ce que** l'unité d'entraînement est connectée par engagement par correspondance de formes à l'élément de connexion (7, 18).

8. Épandeur selon au moins l'une quelconque des revendications précédentes, **caractérisé en ce que** l'élément de connexion élastique en rotation (7, 18) peut être précontraint par rapport à l'unité d'entraînement et l'organe agitateur (6).
